**Europäisches Patentamt**

**European Patent Office**

**Office européen des brevets**

(19)

(11) Veröffentlichungsnummer : **0 408 592 B1**

(12) **EUROPÄISCHE PATENTSCHRIFT**

(45) Veröffentlichungstag der Patentschrift :
**02.01.92 Patentblatt 92/01**

(51) Int. Cl.$^5$ : **F16H 3/54**

(21) Anmeldenummer : **89903154.6**

(22) Anmeldetag : **08.03.89**

(86) Internationale Anmeldenummer :
**PCT/EP89/00240**

(87) Internationale Veröffentlichungsnummer :
**WO 89/08796 21.09.89 Gazette 89/23**

(54) ANTRIEBSEINRICHTUNG MIT EINEM ZWEIGANG-GETRIEBE.

(30) Priorität : **11.03.88 DE 3808067**

(43) Veröffentlichungstag der Anmeldung :
**23.01.91 Patentblatt 91/04**

(45) Bekanntmachung des Hinweises auf die
Patenterteilung :
**02.01.92 Patentblatt 92/01**

(84) Benannte Vertragsstaaten :
**DE FR GB IT SE**

(56) Entgegenhaltungen :
**DE-A- 2 754 967**
**DE-C- 488 062**
**US-A- 4 026 167**
**US-A- 4 178 814**

(73) Patentinhaber : **ZAHNRADFABRIK**
**FRIEDRICHSHAFEN AKTIENGESELLSCHAFT**
**Löwentaler Strasse 100 Postfach 2520**
**W-7990 Friedrichshafen 1 (DE)**

(72) Erfinder : **MANN, Egon**
**Alamannenweg 11**
**W-7990 Friedrichshafen (DE)**
Erfinder : **EYMÜLLER, Helmut**
**Nussbaumweg 5**
**W-7990 Friedrichshafen (DE)**
Erfinder : **STÜTZLE, Siegfried**
**Sonnenbergstr. 34**
**W-7990 Friedrichshafen (DE)**

**Beschreibung**

Die Erfindung betrifft eine Antriebseinrichtung mit einem von einem Antriebsmotor angetriebenen lastschaltbaren Zweigang- Getriebe, insbesondere für Mobilbagger und ähnliche Baumaschinen, mit zwei über hydraulisch schaltbare Reibungskupplungen wechselweise zu- und abschaltbaren Gangstufen, mit einer Ölpumpe zur Versorgung des Getriebes mit Druck- und Schmieröl, wobei beide Reibungskupplungen als durch Öldruck aufsteuerbare Federspeicherkupplungen ausgebildet sind und sowohl zur Schaltung der Gänge als auch als Haltebremse und als Hilfsbetriebsbremse dienen. Dabei ist eine Kupplung zwischen einem Getriebegehäuse und einem äußeren Zentralrad des Zweigang-Getriebes angeordnet, so daß das äußere Zentralrad gegenüber dem Gehäuse festgehalten werden kann.

Für Baumaschinen, die beispielsweise wie Mobilbagger und Radlader schneller als 25 km/h fahren können, bestehen vom Gesetzgeber her verschiedene Auflagen und Vorschriften bezüglich der Bremsen. Neben der normalen Betriebsbremse muß bei einem Einkreisbremssystem eine Hilfsbetriebsbremse vorhanden sein. Ebenso ist eine Feststell- oder Haltebremse erforderlich.

Aus der US-A-4 026 167 ist eine Antriebseinrichtung für hydraulisch angetriebene Fahrzeuge bekannt, die die obengenannten Merkmale aufweist. Bei dieser Antriebseinrichtung sind die Ringkolben, durch die die beiden Reibungskupplungen geöffnet werden können, in dem Gehäuse nichtdrehbar angeordnet. Dadurch treten zwischen nichtdrehbaren und zusammen mit dem äußeren Zentralrad drehenden Teilen, beispielsweise der einen Tellerfeder, Relativbewegungen auf, die wegen der damit auftretenden Reibung nicht erwünscht sind. Die Tellerfeder der einen Reibungskupplung stützt sich dabei einerseits an dem nicht-drehenden Kolben und andererseits an dem äußeren Zentralrad ab. Die dadurch auftretenden hohen Axialkräfte müssen durch ein großes Lager aufgefangen werden. Dieses Lager sowie die wenigstens eine radial außerhalb des äußeren Zentralrades angeordnete Reibungskupplung erfordern einen bestimmten Bauraum, der insbesondere bei Radladern, aber auch bei Mobilbaggern nur begrenzt zur Verfügung steht.

Der Erfindung liegt die Aufgabe zugrunde, eine Antriebseinrichtung der eingangs genannten Art an den begrenzten Einbauraum in Mobilbaggern und ähnlichen Baumaschinen anzupassen und eine Vereinfachung der Bremsen und der Führung der Hydraulikleitungen zu erreichen.

Diese Aufgabe wird durch die im Anspruch 1 gekennzeichnete Antriebseinrichtung dadurch gelöst, daß beide Reibungskupplungen unabhängig voneinander betätigbar sind und die radial innenliegende Reibungskupplung direkt zwischen dem inneren und dem äußeren Zentralrad des Zweigang-Getriebes angeordnet ist zur wahlweisen Verspannung der beiden Zahnräder miteinander.

Aus der US-A-4 178 814 ist zwar eine Antriebseinrichtung bekannt, bei der zwei Reibungskupplungen radial ineinander angeordnet sind. Dabei ist jedoch nur die radial innere Reibungskupplung als Federspeicherkupplung ausgebildet. Die radial außenliegende Reibungskupplung wird dagegen durch denselben im Gehäuse geführten Kolben zugesteuert, der die radial innenliegende Reibungskupplung aufsteuert. Mit den derart radial ineinander angeordneten Reibungskupplungen kann die Funktion einer Haltebremse oder einer Hilfsbetriebsbremse nicht erreicht werden.

Vorteilhafte und zweckmäßige Ausgestaltungen der Erfindung sind in den Unteransprüchen angegeben. Wird für den ersten Gang, der auch als Geländegang bezeichnet werden kann, die radial außenliegende, größere Reibungskupplung geschlossen, so muß diese Kupplung zwar ein Mehrfaches des Eingangsdrehmomentes aufnehmen können. Da aber im zweiten Gang, der durch die geschlossene innere Reibungskupplung geschaltet wird, die radial außenliegende, größere Reibungskupplung offen ist, kann bei den im zweiten Gang auftretenden höheren Geschwindigkeiten die äußere Kupplung beim Bremsen eine größere Bremsenergie aufnehmen. Die beim Bremsen auftretende Wärme kann über das Gehäuse abgeleitet werden. Die innenliegende, kleinere Reibungskupplung muß im zweiten Gang nur einen Teil des Eingangsdrehmomentes übertragen, so daß diese Kupplung kleiner ausgelegt sein kann. Beim Bremsen im ersten Gang mit kleinerer Fahrgeschwindigkeit muß die radial innere Kupplung nur eine geringere Bremsenergie aufnehmen. Die dabei entstehende geringe Wärme wird durch gezielte Schmierung abgeführt. Die innenliegende kleinere und die außenliegende größere Reibungskupplung sind also bei kleinsten Abmessungen an die jeweils zu übertragenden Drehmomente angepaßt.

Durch die Anordnung einer Trennkupplung zwischen dem Zweigang-Getriebe und der Stirnradstufe ist eine Unterbrechung des Antriebsstranges möglich, wenn das Fahrzeug in Notfällen oder zum Versetzen abgeschleppt wird. Durch die Trennkupplung wird der Antrieb des Antriebsstranges von der Lastseite her auf den Bereich bis zu der Stirnradstufe begrenzt. Der Planetensatz des Zweigang-Getriebes, die Reibungskupplungen und der Antriebsmotor werden nicht mitgedreht.

Im folgenden wird die Erfindung anhand eines in der Zeichnung dargestellten Ausführungsbeispieles näher erläutert. Es zeigt

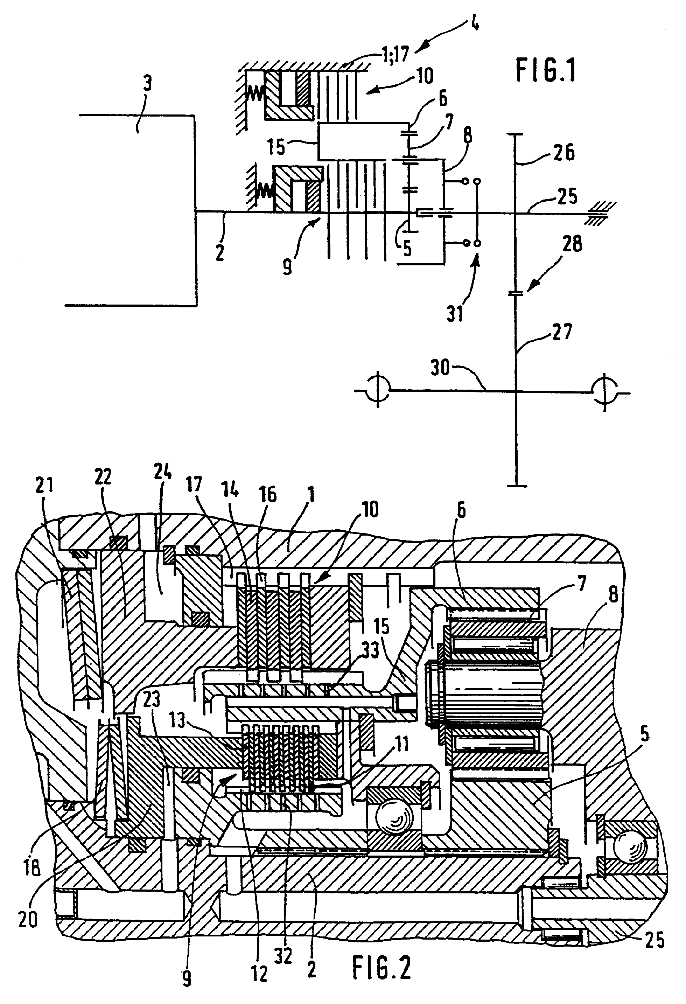

Fig. 1 einen Querschnitt durch die erfindungsgemäße Antriebseinrichtung in schematischer Darstellung,

Fig. 2 einen Teilschnitt der Fig. 1 in vergrößertem Maßstab,

Fig. 3 einen Teilschnitt der Fig. 1 in vergrößertem Maßstab bei Anwendung der Antriebseinrichtung in einem Mobilbagger.

In einem Gehäuse 1 ist eine Eingangswelle 2 drehbar gelagert, die von einem nur schematisch dargestellten Antriebsmotor 3 angetrieben wird. Der Antriebsmotor 3 ist ausgeführt mit stufenloser Drehzahl- und Drehmomentwandlung aus der Anfangsdrehzahl Null heraus. Dafür ist insbsondere ein Hydromotor geeignet. Aber auch die Anwendung eines Elektromotors ist möglich. Ein in dem Gehäuse 1 angeordnetes Zweigang-Getriebe 4 ist als Planetengetriebe ausgebildet. Ein inneres Zentralrad 5 des Planetengetriebes ist mit der Eingangswelle 2 drehfest verbunden. Außerdem gehört zu dem Zweigang-Getriebe 4 ein äußeres Zentralrad 6 und eine Anzahl von Planetenrädern 7, die an einem Planetenträger 8 gehalten sind.

Die beiden Gangstufen des Zweigang-Getriebes 4 sind über zwei Reibungskupplungen 9 und 10 schaltbar. Die beiden Reibungskupplungen 9 und 10 sind radial ineinander angeordnet mit im wesentlichen gleicher axialer Erstreckung. Die radial außenliegende Reibungskupplung 10 ist als Bremse ausgeführt, wird jedoch im weiteren als Reibungskupplung bezeichnet. Beide Reibungskupplungen 9 und 10 sind als Lamellenkupplungen ausgeführt. Die radial innenliegende und damit kleinere Reibungskupplung 9 weist Innenlamellen 11 auf, die über einen Lamellenträger 12 drehfest mit der Eingangswelle 2 verbunden sind. Außenlamellen 13 der innenliegenden Reibungskupplung 9 und Innenlamellen 14 der radial außenliegenden und damit größeren Reibungskupplung 10 sind durch einen gemeinsamen Lamellenträger 15 drehfest mit dem äußeren Zentralrad 6 verbunden. Außenlamellen 16 der außenliegenden Reibungskupplung 10 sind in einem Lamellenträger 17 drehfest gehalten, der mit dem Gehäuse 1 fest verbunden ist.

Die innenliegende Reibungskupplung 9 wird durch Tellerfedern 18 über einen Kolben 20 geschlossen. Die außenliegende Reibungskupplung 10 wird durch Tellerfedern 21 über einen Kolben 22 geschlossen. Die innenliegende Reibungskupplung 9 kann durch einen Öldruck aufgesteuert werden, der einem Zylinderraum 23 zugeführt wird. Die außenliegende Reibungskupplung 10 kann durch einen Öldruck aufgesteuert werden, der einem Zylinderraum 24 zugeführt wird.

Der Planetenträger 8 ist auf einer Zahnradwelle 25 gelagert, die ihrerseits in dem Gehäuse 1 gelagert ist. Die Zahnradwelle 25 trägt ein Stirnrad 26, das mit einem weiteren Stirnrad 27 kämmt. Die beiden Stirnräder 26 und 27 bilden zusammen eine Stirnradstufe 28. Das Stirnrad 27 ist auf einer Ausgangswelle 30 befestigt, über die die Räder der Baumaschine angetrieben werden.

Zwischen dem Zweigang-Getriebe 4 und der Stirnradstufe 28 ist eine Trennkupplung 31 eingebaut, durch die die Verbindung zwischen dem Zweigang-Getriebe 4 und der Stirnradstufe 28 ein-und ausschaltbar ist.

Im folgenden wird die Funktion der Antriebseinrichtung beschrieben: Im Stillstand des Fahrzeuges sind die beiden Reibungskupplungen 9 und 10, die als Federspeicherkupplungen ausgebildet sind, durch die Kraft der Tellerfedern 18 und 21 geschlossen. Dadurch sind die Räder des Zweigang-Getriebes 4 blockiert. Die Einrichtung wirkt als Haltebremse.

Zum Einschalten des ersten Ganges wird die radial innenliegende Reibungskupplung 9 dadurch geöffnet, daß dem Zylinderraum 23 Drucköl zugeführt wird. Der Kolben 20 wird dadurch gegen die Kraft der Tellerfedern 18 nach links verschoben. Ist das Zweigang-Getriebe 4 beispielsweise mit einer Übersetzung von 1 : 4 ausgelegt, so stützt die radial außenliegende Reibungskupplung 10 ein Haltemoment ab, das dem dreifachen Wert des Eingangsdrehmomentes entspricht. An dem Planetenträger 8, der über die geschlossene Trennkupplung 31 mit der Stirnradstufe 28 und damit mit der Ausgangswelle 30 verbunden ist, kann ein Ausgangsdrehmoment in der vierfachen Höhe des Eingangsdrehmomentes abgenommen werden.

Zum Einschalten des zweiten Ganges wird die innenliegende Reibungskupplung 9 geschlossen, während gleichzeitig die außenliegende Reibungskupplung 10 geöffnet wird. Nach dem Vollzug der Schaltung teilt sich das Eingangsdrehmoment in zwei Zweige auf: 75 % des Eingangsdrehmomentes werden über die geschlossene innere Reibungskupplung 9, den Lamellenträger 15, das äußere Zentralrad 6, die Planetenräder 7 zu dem Planetenträger 8 geleitet. In einem zweiten, direkten Zweig werden 25 % des Eingangsdrehmomentes von der Eingangswelle 2 über das innere Zentralrad 5 und die Planetenräder 7 zu dem Planetenträger 8 geleitet. Der Planetenträger 8 leitet dann die summierte Leistung an die Stirnradstufe 28 und die Ausgangswelle 30 weiter.

Im zweiten Gang, der dem Straßengang entspricht, ist das äußere Zentralrad 6 mit dem inneren Zentralrad 5 über die innenliegende Reibungskupplung 9 verspannt. Soll bei einem Ausfall der Betriebsbremse das Fahrzeug abgebremst werden, so wird der Zylinderraum 24 dosiert über ein nicht dargestelltes Bremsventil entlüftet, so daß die außenliegende Reibungskupplung 10 kontinuierlich und stetig geschlossen wird. Durch die außenliegende Anordnung der Reibungskupplung 10 und den dadurch vorhandenen großen Durchmesser der Innen- und Außenlamellen 14 und 16 kann die bei hohen Fahrzeuggeschwindigkeiten auftretende hohe Bremsenergie gut aufgenommen werden. Bei einer Abbremsung im ersten Gang, im Geländegang, erfolgt die Bremsung über die innenliegende Reibungskupplung 9. Die Geschwindigkeit des Fahrzeuges beträgt hierbei nur einen Bruchteil der Geschwindigkeit des zweiten Ganges, so daß die innenliegende, kleinere Reibungskupplung 9 in der Lage ist, die wesentlich geringere Bremsenergie aufzunehmen.

Auf diese Weise wirkt die Antriebseinrichtung als Hilfsbetriebsbremse. Die vom Gesetzgeber vorgeschriebene Vollbremsung aus maximaler Geschwindigkeit, d. h. bei eingeschaltetem zweiten Gang, läßt sich bei der erfindungsgemäßen Anordnung der Reibungskupplungen 9 und 10 in vorteilhafter Weise durchführen, da die großen Lamellen eine große Reib- und Bremsarbeit aufnehmen können und eine gute Ableitung der auftretenden großen Wärme an das Gehäuse 1 gewährleisten.

Soll das Fahrzeug in Notfällen oder zum Versetzen abgeschleppt werden, so wird die Trennkupplung 31 geöffnet. Damit wird der Antriebsmotor 3 und das Zweigang-Getriebe 4 von der Stirnradstufe 28 getrennt. Der Antrieb von der Radseite des Fahrzeuges erfolgt nur bis zu der Stirnradstufe 28. Der Planetensatz des Zweigang-Getriebes 4 sowie die Reibungskupplungen 9 und 10 sind dabei stillgesetzt.

Außer den bisher genannten Vorteilen bietet die erfindungsgemäße Antriebseinrichtung noch folgende Vorteile: Die beiden Reibungskupplungen 9 und 10 werden durch in den Lamellenträgern 12 und 15 angeordnete Bohrungen 32, 33 so gut geschmiert, daß die durch die beiden Reibungskupplungen gebildete Hilfsbetriebsbremse sehr verschleißarm arbeitet. Bei der Verwendung der Antriebseinrichtung bei einem Mobilbagger muß keine separate Bremsleitung für die Feststellbremse durch das Drehgelenk geführt werden. Ein Anfahren aus dem Stand ist auch bei Verwendung einer relativ kleinen Ölpumpe und bei niedrigen Drehzahlen möglich, da nur eine sehr kleine Ölmenge zum Öffnen einer der beiden Reibungskupplungen 9 oder 10 erforderlich ist. Ein sehr kleiner Hub von etwa 0,2 mm genügt nämlich bereits zum Lösen der Lamellen der Reibungskupplungen.

Unter Berücksichtigung von Sicherheitsaspekten ergibt sich mit der erfindungsgemäßen Ausbildung der Antriebseinrichtung der Vorteil, daß das Fahrzeug nicht anfahren kann, ohne daß die Trennkupplung geschlossen ist. Dadurch wird sichergestellt, daß die Hilfsbetriebs- und Haltebremse voll funktionsfähig ist.

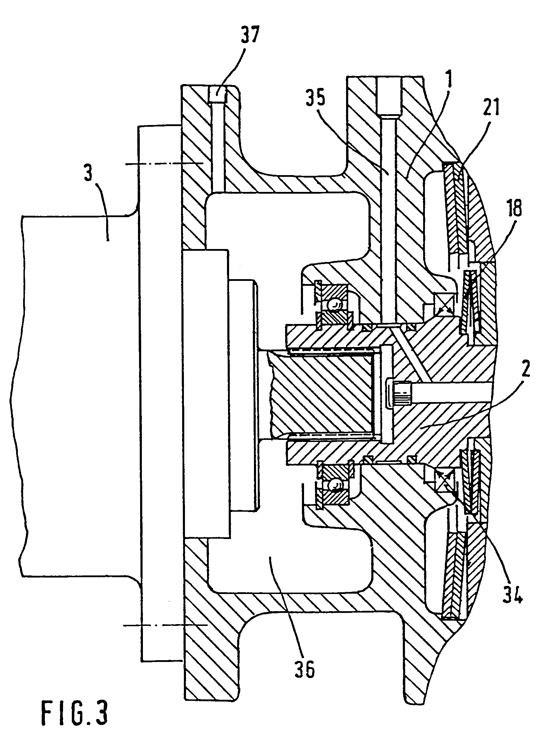

Bei Einbau der Antriebseinrichtung in einen Mobilbagger ist es außerdem zweckmäßig und vorteilhaft, zwischen der Eingangswelle 2 und dem Gehäuse 1 einen Wellendichtring 34 anzuordnen. Dadurch wird Lecköl, das an einem Drucköl-Anschluß 35 zu dem Zylinderraum 23 zwischen dem Gehäuse 1 und der Eingangswelle 2 austreten könnte, auf einen Gehäuseraum 36 begrenzt, der in Fig. 3 links von dem Wellendichtring 34 vorgesehen ist. In dem Gehäuseraum 36 drehen sich nur kreiszylindrische Teile, wie die Eingangswelle 2 und Verbindungsteile 2 des Antriebsmotors 3. Eine Verwirbelung des Öles beispielsweise durch verzahnte Teile ist nicht möglich. Das Lecköl aus dem Gehäuseraum 36 wird über eine Steigleitung 37 automatisch in den im Oberwagen des Mobilbaggers angeordneten Öltank abgeleitet. Durch die Anordnung des als Leckölsammelraum dienenden Gehäuseraumes 36, der gegenüber dem Zweigang-Getriebe 4 abgedichtet ist, kann eine separate Absaugpumpe entfallen.

## Patentansprüche

1. Antriebseinrichtung, insbesondere für Mobilbagger und ähnliche Baumaschinen, mit einem von einem Antriebsmotor (3) mit aus der Anfangsdrehzahl Null heraus stufenloser Drehzahl- und Drehmomentwandlung, insbesondere einem Hydromotor, angetriebenen lastschaltbaren, als Planetengetriebe ausgebildeten Zweigang-Getriebe (4), dessen inneres Zentralrad (5) mit einer Eingangswelle (2) des Zweigang-Getriebes (4) drehfest verbunden ist, mit zwei über hydraulisch schaltbare Reibungskupplungen (9, 10) wechselweise zu- und abschaltbaren Gangstufen, mit wenigstens einer Ölpumpe zur Versorgung mit Druck- und Schmieröl, wobei beide Reibungskupplungen (9, 10) als durch Öldruck aufsteuerbare Federspeicherkupplungen ausgebildet sind und sowohl zur Schaltung der Gänge als auch als Haltebremse und als Hilfsbetriebsbremse dienen, und wobei eine der Reibungskupplungen (10) zwischen einem Gehäuse (1) und einem äußeren Zentralrad (6) des Zweigang-Getriebes (4) angeordnet ist zum wahlweisen Feststellen des äußeren Zentralrades (6) gegenüber dem Gehäuse (1), dadurch **gekennzeichnet,**
   – daß beide Reibungskupplungen (9, 10) radial ineinander angeordnet sind,
   – daß beide Reibungskupplungen (9, 10) unabhängig voneinander betätigbar sind und
   – daß die radial innenliegende Reibungskupplung (9) direkt zwischen dem inneren und dem äußeren Zentralrad (5, 6) angeordnet ist zur wahlweisen Verspannung der beiden Zentralräder (5, 6) miteinander.

2. Antriebseinrichtung nach Anspruch 1, dadurch **gekennzeichnet,** daß im ersten Gang die radial außenliegende, größere Reibungskupplung (10) geschlossen und die radial innenliegende, kleinere Reibungskupplung (9) offen ist und daß im zweiten Gans die radial innenliegende Reibungskupplung (9) geschlossen und die radial außenliegende Reibungskupplung (10) offen ist.

3. Antriebseinrichtung nach Anspruch 2, dadurch **gekennzeichnet,** daß bei Betätigung der durch die beiden Reibungskupplungen (9, 10) gebildeten Halte- oder Hilfsbetriebsbremse die jeweils offene Reibungskupplung (9 bzw. 10) über ein Bremsventil entlüftet wird.

4. Antriebseinrichtung nach Anspruch 1, dadurch **gekennzeichnet**, daß beide Reibungskupplungen (9, 10) als Lamellenkupplungen ausgebildet sind und einen gemeinsamen Lamellenträger (15) aufweisen, wobei die eine Reibungskupplung (9) innerhalb und die andere Reibungskupplung (10) außerhalb des Lamellenträgers (15) angeordnet ist.

5. Antriebseinrichtung nach Anspruch 4, dadurch **gekennzeichnet**, daß der Lamellenträger (15) mit einem äußeren Zentralrad (6) des Zweigang-Getriebes (4) drehfest verbunden ist.

6. Antriebseinrichtung nach Anspruch 1, dadurch **gekennzeichnet**, daß im Anschluß an das Zweigang-Getriebe (4) eine Stirnradstufe (28) angeordnet ist und daß zwischen dem Lastschaltteil mit dem Planetensatz des Zweigang-Getriebes (4) und der Stirnradstufe (28) eine Trennkupplung (31) für eine Unterbrechung des Antriebsstranges eingebaut ist.

7. Antriebseinrichtung nach Anspruch 1, dadurch **gekennzeichnet**, daß zwischen der Eingangswelle (2) und dem Gehäuse (1) ein Wellendichtring (34) angordnet ist, der einen als Leckölsammelraum dienenden Gehäuseraum (36) von einem das Zweigang-Getriebe (4) enthaltenden Raum des Gehäuses (1) trennt.

8. Atriebseinrichtung nach Anspruch 7, dadurch **gekennzeichnet**, daß der Gehäuseraum (36) über eine Steigleitung (37) mit einem zentralen Ölsammelbehälter verbunden ist.

## Claims

1. Drive mechanism, in particular for mobile excavators and similar building machines, having a load-switchable two-speed gear (4) in the form of a planetary gear which is driven by a drive motor (3) with stepless speed and torque variation from the initial speed zero, in particular a hydraulic motor, and whose inner central wheel (5) is non-rotatably connected to a primary shaft (2) of the two-speed gear (4), having two gear steps which may be alternately engaged and disengaged by means of hydraulically operable friction clutches (9, 10), having at least one oil pump for supplying pressure oil and lubricating oil, with the two friction clutches (9, 10) taking the form of oil pressure-controllable spring-operated clutches and serving not only to shift the gears but also as a holding brake and an auxiliary brake, and with one of the friction clutches (10) being disposed between a housing (1) and an outer central wheel (6) of the two-speed gear (4) for selectively fixing the outer central wheel (6) relative to the housing (1), **characterised** in that
   – the two friction clutches (9, 10) are disposed radially one inside the other,
   – the two friction clutches (9, 10) are operable independently of one another and
   – the radially inner-lying friction clutch (9) is disposed directly between the inner and the outer central wheels (5, 6) for selectively bracing the two central wheels (5, 6) one with the other.

2. Drive mechanism according to claim 1, **characterised** in that in the first gear the radially outer-lying, larger friction clutch (10) is closed and the radially inner-lying, smaller friction clutch (9) is open, and in that in the second gear the radially inner-lying friction clutch (9) is closed and the radially outer-lying friction clutch (10) is open.

3. Drive mechanism according to claim 2, **characterised** in that upon actuation of the holding or auxiliary brake formed by the two friction clutches (9, 10), the friction clutch (9 or 10) open at that moment is bled by way of a brake valve.

4. Drive mechanism according to claim 1, **characterised** in that the two friction clutches (9, 10) take the form of multiple-disk clutches and have a common disk carrier (15), with one friction clutch (9) being disposed inside and the other friction clutch (10) being disposed outside of the disk carrier (15).

5. Drive mechanism according to claim 4, **characterised** in that the disk carrier (15) in non-rotatably connected to an outer central wheel (6) of the two-speed gear (4).

6. Drive mechanism according to claim 1, **characterised** in that a spur gear step (28) is disposed adjoining the two-speed gear (4), and in that a disconnect-type clutch (31) for interrupting the drive train is installed between the load-switching part with the planetary set of the two-speed gear (4) and the spur gear step (28).

7. Drive mechanism according to claim 1, **characterised** in that disposed between the primary shaft (2) and the housing (1) is a rotary shaft seal (34) which separates a housing area (36) serving as a leakage oil collecting area from an area of the housing (1) containing the two-speed gear (4).

8. Drive mechanism according to claim 7, **characterised** in that the housing area (36) is connected by a riser (37) to a central oil collecting tank.

## Revendications

1. Mécanisme d'entraînement, notamment pour des excavatrices automobiles et des machines de chantier analogues, comportant une boîte à deux vitesses (4) commutable en charge, constituée par une boîte planétaire entraînée par un moteur (3) à variation continue de la vitesse de rotation et du couple à partir d'une vitesse initiale nulle, notamment un moteur hydraulique, la roue planétaire intérieure (5) de cette boîte étant solidaire en rotation d'un arbre d'entrée (2) de la boîte à deux vitesses (4), avec deux vitesses qui peuvent être enclenchées et déclenchées alternativement au moyen d'embrayages à friction (9, 10) commandés hydrauliquement, et avec au moins une pompe à huile pour l'alimentation en huile de presseion et de lubrification, dans lequel les deux embrayages à friction (9, 10) sont formés par des embrayages à ressorts commandés au moyen d'huile sous pression et servent aussi bien de moyens pour changer les vitesses que de frein d'arrêt et de frein de service auxiliaire, dans lequel l'un des embrayages à friction (10) est disposé entre un carter (1) et une roue planétaire extérieure (6) de la boîte à deux vitesses (4) pour bloquer sélectivement ladite roue (6) par rapport au carter (1), **caractérisé** en ce que :

– les deux embrayages à friction (9, 10) sont disposés radialement l'un en dedans de l'autre;

– les deux embrayages à friction (9, 10) peuvent être actionnés indépendamment l'un de l'autre, et

– l'embrayage à friction (9) situé radialement en dedans est disposé directement entre la roue planétaire intérieure (5) et la roue planétaire extérieure (6) pour bloquer sélectivement l'une à l'aute de ces deux roues (5, 6).

2. Mécanisme d'entraînement selon la revendication 1, **caractérisé** en ce que pour la première vitesse le plus grand embrayage (10), situé radialement en dehors, est fermé et le plus petit embrayage (9), situé radialeent en dedans, est ouvert et en ce que pour la seconde vitesse l'embrayage situé radialement en dedans (9) est fermé et l'embrayage situé radialement en dehors (10) est ouvert.

3. Mécanisme d'entraînement selon la revendication 2, **caractérisé** en ce que, lors de l'actionnement du frein d'arrêt ou auxiliaire formé par les deux embrayages (9, 10), l'embrayage (9 ou 10) qui est en position ouverte est mis à l'air au moyen d'une soupape de freinage.

4. Mécanisme d'entraînement selon la revendication 1, **caractérisé** en ce que les deux embrayages (9, 10) sont formés par des embrayages multidisques et comportent un porte-disques commun (15), l'un (9) des embrayages étant disposé en dedans du porte-disques (15) et l'autre (10) en dehors.

5. Mécanisme d'entraînement selon la revendication 4, **caractérisé** en ce que le porte-disques (15) est solidaire en rotation d'une roue planétaire extérieure (6) de la boîte à deux vitesses (4).

6. Mécanisme d'entraînement selon la revendication 1, **caractérisé** en ce que la boîte à deux vitesses (4) est suivie d'un engrenage à pignons droits (28) et en ce qu'un embrayage de coupure (31) est interposé entre la partie commutable en charge à train planétaire de la boîte à deux vitesses (4) et l'engrenage à pignons droits (28), pour une coupure de la ligne de transmission.

7. Mécanisme d'entraînement selon la revendication 1, **caractérisé** en ce qu'un joint d'étanchéité d'arbre (34) est placé entre l'arbre d'entrée (2) et le carter (1) et sépare, dans le carter (1), une chambre (36) servant de collecteur de fuite d'huile et une chambre contenant la boîte à deux vitesses (4).

8. Mécanisme d'entraînement selon la revendication 7, **caractérisé** en ce que la chambre (36) servant de collecteur est raccordée à un réservoir central collecteur d'huile par un conduit montant (37).

FIG.1

FIG.2

FIG.3